# EUROPEAN PATENT APPLICATION

(11) **EP 3 690 411 A1**
(43) Date of publication of application: **05.08.2020**
(21) Application number: 19154443.6
(22) Date of filing: 30.01.2019
(51) Int. Cl.: G01K 1/02, G01K 1/14

(54) **MEASUREMENT DEVICE**

(71) Applicant: ELECTROLUX APPLIANCES AKTIEBOLAG, 105 45 Stockholm (SE)
(72) Inventor: RE DIONIGI, Gianpaolo, 47122 Forli (IT); BELLO, Stefania, 47100 Forli (IT); DI PIANO, Giovanni, 47100 Forli (IT); BEKJAROVA, Milka, 47100 Forli (IT)
(74) Representative: Electrolux Group Patents

(57) **Abstract**

The invention relates to a measurement device for providing measurement information of food received in a cooking appliance, the measurement device (1) comprising a handle (2) and multiple measurement probes (3) protruding from said handle (2), each measurement probe (3) comprising one or more sensors (4), wherein the measurement probes (3) are deformable at least in transverse direction in order to change the distance (d) between the free ends (3.1) of the measurement probes (3).

## Description

The present invention relates generally to the field of measurement devices. More specifically, the present invention relates to a measurement device for gathering information of food received at or within a cooking appliance.

### BACKGROUND OF THE INVENTION

Measurement devices for gathering information of food to be prepared are already known in prior art. Said measurement devices, for example, comprise a measurement probe to be inserted into the food to be prepared. One or more sensors may be arranged at the food probe in order to derive information regarding said food, for example, temperature within said food.

German patent application DE 10 2012 222 144 A1 discloses a device for controlling a cooking process. The device comprises a temperature probe comprising multiple temperature sensors arranged at different height positions of the temperature probe.

International patent application WO 2007/009880 A1 and European patent application 2 108 929 A1 disclose a food cooking control device comprising multiple temperature probes. Said temperature probes are arranged at different height levels within the food in order to gather temperature information at said height levels.

Disadvantageously, known temperature measurement devices are quite inflexible regarding their usage in different kinds of food to be prepared.

### SUMMARY OF THE INVENTION

It is an objective of the embodiments of the invention to provide a measurement device for usage at or within a cooking appliance which shows a greater degree of flexibility in order to allow its usage in a broader range of food to be cooked. The objective is solved by the features of the independent claims. Preferred embodiments are given in the dependent claims. If not explicitly indicated otherwise, embodiments of the invention can be freely combined with each other.

According to an aspect, the invention relates to a measurement device for providing measurement information of food received at or within a cooking appliance. The measurement device comprises a handle and multiple measurement probes protruding from said handle. Each measurement probe comprises one or more sensors. The measurement probes are flexible, respectively, deformable at least in transverse direction in order to change the distance between the free ends of the measurement probes. Said transverse direction may be a direction which crosses a longitudinal axis of the measurement device.

Said measurement device is advantageous because due to said deformable measurement probes it is possible to arrange the sensors in a spatial distributed manner or spatially bundle the measurement probes in a certain area. Thereby it is possible to control the cooking process of different kind of foods in an appropriate way, regardless if the food shows a homogenous consistency or not.

According to embodiments, said measurement device comprises a mechanism interacting with the measurement probes. The mechanism is adapted to radially bundle the measurement probes in a first position and enables a distancing of the measurement probes in a second position. Said measurement device may apply bending forces to the measurement probes in the first position in order to bend the measurement probes radially inwardly (radially with respect to the longitudinal axis of the measurement device). Thereby, said mechanism enables a spatially concentrated measurement (first position) and a spatially distributed measurement (second position).

According to embodiments, said mechanism is an extendable or telescopic mechanism arranged at or coupled with said handle. In the extended position, a portion of the extendable or telescopic mechanism is arranged in closer proximity to the free ends of said measurement probes. According to an embodiment, said portion presses the measurement probes together. Preferably, the free ends of the measurement probes abut against each other or are in close proximity to each other. Thereby, a spatial aggregation of measurement probes and the sensors arranged at said measurement probes can be obtained.

According to embodiments, said mechanism comprises an arm with variable length or a sleeve-like configuration surrounding said multiple measurement probes. Said arm or sleeve of the mechanism comprises contact portions which are in contact with portions of the measurement probes. When extending or telescoping the mechanism, contact portions move towards the free ends of the measurement probes thereby providing a radial bundling of the measurement probes. In case of a sleeve-like configuration, said sleeves may surround the measurement probes circumferentially.

According to embodiments, said mechanism is adapted to press portions of the measurement probes against each other. Preferably, the free ends of the measurement probes are pressed against each other. Thereby a radial bundling of measurement probes is obtained.

According to embodiments, said mechanism comprises a lock mechanism in order to fix the mechanism in a position in which the measurement probes are radially bundled. Thereby it is possible to secure the probe deforming mechanism in order to avoid an undesired spreading of the measurement probes.

According to embodiments, the length of at least some of the measurement probes is variable. In other words, the length of the individual measurement probes can be varied or the measurement probes are coupled with each other such that the length of all measurement probes can be varied simultaneously. Thereby, the insertion depth of the measurement probes can be chosen as desired.

According to embodiments, a locking mechanism is provided in order to fix the length of one or more measurement probes. Thereby an undesired shortening or lengthening of the measurement probes can be avoided.

According to embodiments, one sensor is provided at each measurement probe. Said sensor may be provided at the free end of the measurement probe or at an arbitrary position along the measurement probe. Alternatively, a first subgroup of measurement probes comprises no sensor and each measurement probe of a second subgroup of measurement probes comprises one sensor. The first subgroup of measurement probes may only comprise a single measurement probe which is used as mechanical support.

According to embodiments, the sensors are provided at different positions with respect to the longitudinal direction of the measurement probes. So, in other words, the sensors of different measurement probes are provided at different height positions. Advantageously, when spatially bundling the measurement probes, the sensors are arranged in different height positions with respect to a longitudinal direction (insertion direction) and information is gathered at said different height positions.

According to embodiments, multiple sensors are provided at each measurement probe, the sensors being arranged at different positions with respect to the longitudinal direction of the measurement probe. Thereby it is possible to derive information at different height levels also in case of a spatially distributed arrangement of the measurement probes.

According to embodiments, the measurement probes comprise one or more markings for indicating the position of the sensor. Thereby it is possible for the user to recognise the position at which the sensor is included in the measurement probe.

According to embodiments, said measurement probes are configured such that all measurement probes are inserted in a single piece of food or each measurement probe or groups of measurement probes are inserted in different pieces of food. Also inserting the measurement probes in different types of food may be possible (e.g. a first measurement probe in a roast beef and a second measurement probe in a potato). Thus, the measurement probes may comprise a length and may be deformable such that the measurement probes can be inserted in different pieces of food, specifically, different pieces of cookware comprising said pieces of food.

According to embodiments, the measurement device comprises one or more wires in order to be coupled with a cooking appliance or a wireless communication module in order to enable a wireless communication link with the cooking appliance.

According to embodiments, the measurement probes may be made of a flexible material, specifically an elastically deformable material. Said material may be, for example, a flexible metal or a flexible, heat-resistant plastic.

According to a further aspect, the invention relates to a cooking appliance or food preservation appliance comprising a measurement device as explained above. Said appliance may be, for example, a baking oven, a steam oven, a fridge or freezer etc.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example embodiment of a measurement device with multiple spatially distributed measurement probes;
- Fig. 2: shows an example embodiment of a measurement device spatially bundled measurement probes;
- Fig. 3: shows an example embodiment of a measurement device with multiple spatially distributed measurement probes included in multiple different pieces of food; and
- Fig. 4: shows an example embodiment of a measurement device with multiple spatially distributed measurement probes included in a single piece of food.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

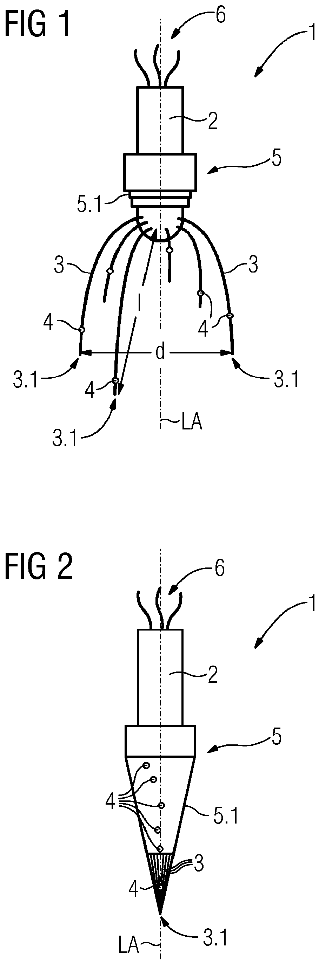

Fig. 1 illustrates a schematic diagram of a measurement device 1 according to the present invention.

The measurement device 1 comprises a handle 2 and multiple measurement probes 3 protruding from said handle 2. In the present example, the measurement device 1 comprises one or more wires 6 in order to couple the measurement device 1 with a cooking appliance. Based on said one or more wires 6, the measurement device 1 is powered and information gathered by the measurement device 1 are transmitted to the cooking appliance. However, also a wireless communication between the measurement device 1 and the cooking appliance may be possible, i.e. the measurement device 1 comprises a wireless communication module for exchanging information with the cooking appliance. In addition, the measurement device 1 may be battery-powered.

Each measurement probe 3 comprises one or more sensors 4. According to one embodiment, each measurement probe 3 comprises a single sensor 4. As shown in fig. 1, the sensors 4 may be provided at different heights at the respective measurement probes 3. So in other words, the distance between the free end 3.1 of the probe 3 and the sensor 4 may vary.

According to another embodiment, each measurement probe 3 comprises multiple sensors 4 which are distributed along the longitudinal axis of the measurement probe 3.

The one or more sensors 4 provided within the measurement probe 3 are electrically coupled via one or more wires provided within the measurement probe 3 and the handle 2 either with one or more wires 6 or with a wireless communication module provided at or within the handle 2.

The sensor 4 may be adapted to provide measurement information like temperature, humidity etc. So, the sensor 4 may be a temperature sensor or a humidity sensor.

In order to operate the measurement device 1 in different configurations, a mechanism 5 is provided which interacts with the measurement probes 3 in order to change the spatial arrangement of the free ends 3.1 of the measurement probes 3.

In order to enable said change of spatial arrangement, the measurement probes 3 are deformable. For example, the measurement probes 3 may be made of a flexible, heat resistant material. For example, said measurement probes 3 may be made of an elastically deformable material, e.g. spring metal.

The measurement probes 3 may be secured with a first end at or within the handle 2 and may protrude from the handle 2 such that without applying external forces (e.g. by means of a probe deforming mechanism 5), the free ends 3.1 of the measurement probes 3 are spatially distributed and distanced from each other. As shown in fig. 1, said measurement probes 3 may comprise a curved shape, wherein said measurement probes 3 radially protrude out of said handle 2 and are oriented parallel or essentially parallel to a longitudinal axis LA in the area of the free ends 3.1 of the measurement probes 3.

In order to arrange the measurement probes 3 in at least two different configurations, a mechanism 5 is provided. In the following, said mechanism 5 is referred to as probe deforming mechanism 5.

In the embodiment of Fig. 1 and 2, the probe deforming mechanism 5 is a telescopic mechanism which comprises at least one, preferably two or more sleeve-like elements 5.1 which can be moved in axial direction (axial with respect to the longitudinal axis LA of the measurement device 1). According to other embodiments, the probe deforming mechanism 5 may comprise another kind of mechanism, e.g. an arm with a variable length or an extensible mechanism. Said one or more sleeve elements 5.1 (or said arm) may encompass the measurement probes 3 in an upper region (close to the handle) and apply radial bending forces to the measurement probes 3 in order to achieve a spatial bundling or spatial aggregation.

The probe deforming mechanism 5 is fixed at the handle 2 and can be extended downwardly towards the free ends 3.1 of the measurement probes 3. Thereby, the probe deforming mechanism 5 interacts with the measurement probes 3 in order to bundle the free ends 3.1 of the measurement probes 3 in close proximity to each other. In other words, based on the probe deforming mechanism 5 it is possible to move the free ends 3.1 of the measurement probes 3 from a spatially distributed configuration (fig. 1) in a spatially bundled configuration (fig. 2) in which the measurement probes 3 are clamped together, i.e. the distance d between the free ends 3.1 of the measurement probes is varied. Preferably, the measurement probes 3 are bundled such that the free ends 3.1 of the measurement probes 3 abut against each other. Thereby, it is possible to use the measurement device for deriving spatially distributed measurement information (using the configuration of fig. 1) and for deriving measurement information in a limited space (using the configuration of fig. 2).

Preferably, at least a portion of the probe deforming mechanism 5 is adapted to be inserted in the food to be evaluated by the sensors 4. Preferably, the probe deforming mechanism 5 comprises a conical shape (when extended) in order to facilitate the inserting of the measurement device into the food.

The probe deforming mechanism 5 further comprises a locking mechanism in order to fix the probe deforming mechanism 5 in a state in which the measurement probes 3 are spatially bundled. Said locking mechanism may comprise, for example, a locking element comprising a hook or a rotatable locking element.

In order to adapt the measurement device 1 to the respective food to be evaluated, the measurement probes 3 may be adjustable with respect to their length 1. So, in other words, the measurement probes 3 can be shortened by inserting an upper portion into the handle 2, or respectively, the measurement probes 3 can elongated by pulling an upper portion of the measurement probes 3 out of the handle 2. Said length adjustment mechanism may be adapted to adjust the length of all measurement probes 3 simultaneously or the length of each measurement probe 3 can be selected independent of the length of the other measurement probes 3. Preferably, the length adjustment mechanism may comprise a locking mechanism in order to fix the length of the measurement probes 3.

In order to enable the user of the measurement device 1 to recognize the position of the sensor 4 at or within the measurement probe 3, a marking is provided. Said marking indicates the position at which the sensor 4 is included at or within the measurement probe 3.

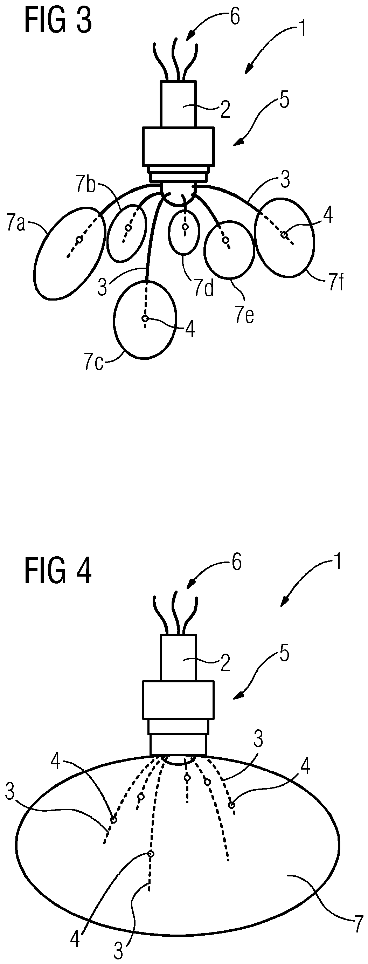

Fig. 3 illustrates the usage of the usage of the measurement device for deriving measurement information from a plurality of pieces of food 7a - 7f. For example, said pieces of food 7a - 7f may be included in different pieces of cookware. In order to derive information of each piece of food 7a - 7f, one or more measurement probes 3 are inserted in each piece of food 7a - 7f.

Fig. 4 shows a further embodiment in which multiple or all measurement probes 3 are inserted in a single piece of food 7. Thereby, information can be gathered at different portions of food 7. For example, temperature values can be achieved at different portions of food 7 thereby enabling a more sophisticated control of the cooking process.

The presented measurement device 1 may be an integral part of a cooking appliance, e.g. a baking oven. According to other embodiments, the measurement device 1 may be adapted to be coupled (wirelessly or wired using a plug-in-connector) with a cooking appliance.

The advantages of the presented measurement device 1 may be summed up as follows:
- possibility to control the cooking process of multiple loads within the cavity;
- possibility to increase the accuracy of internal food temperature measurement due to spatial distribution of sensors 4 (determine 3D food properties);
- possibility to increase the accuracy of internal food temperature measurement on non-homogenous pieces of food;
- possibility to gather information in different heights within the food when operating the measurement device 1 in bundled configuration and e.g. choosing the lowest temperature value for controlling the cooking process;
- energy savings due to accurately controlled cooking process.

It should be noted that the description and drawings merely illustrate the principles of the proposed invention. Those skilled in the art will be able to implement various arrangements that, although not explicitly described or shown herein, embody the principles of the invention.

### List of reference numerals

- 1: measurement device
- 2: handle
- 3: measurement probe
- 3.1: free end
- 4: sensor
- 5: mechanism
- 6: wire
- 7, 7a - 7f: piece of food

## Claims

1. Measurement device for providing measurement information of food received at or within a cooking appliance, the measurement device (1) comprising a handle (2) and multiple measurement probes (3) protruding from said handle (2), each measurement probe (3) comprising one or more sensors (4), **characterized in that** the measurement probes (3) are deformable at least in transverse direction in order to change the distance (d) between the free ends (3.1) of the measurement probes (3) .

2. Measurement device according to claim 1, comprising a mechanism (5) interacting with the measurement probes (3), the mechanism being adapted to radially bundle the measurement probes (3) in a first position and enabling a distancing of the measurement probes (3) in a second position.

3. Measurement device according to claim 1 or 2, wherein said mechanism (5) is an extendable or telescopic mechanism arranged at or coupled with said handle (2).

4. Measurement device according to claim 2 or 3, wherein said mechanism comprises an arm with variable length or a sleeve-like configuration surrounding said multiple measurement probes (3).

5. Measurement device according to anyone of claims 2 to 4, wherein said mechanism (5) is adapted to press portions of the measurement probes (3) against each other.

6. Measurement device according to anyone of claims 2 to 5, wherein said mechanism (5) comprises a lock mechanism in order to fix the mechanism in a position in which the measurement probes (3) are radially bundled.

7. Measurement device according to anyone of the preceding claims, wherein the length (1) of at least some of the measurement probes (3) is variable.

8. Measurement device according to anyone of the preceding claims, wherein a locking mechanism is provided in order to fix the length (1) of one or more measurement probes (3).

9. Measurement device according to anyone of the preceding claims, wherein one sensor (4) is provided at each measurement probe (3) or a first subgroup of measurement probes (3) comprises no sensor (4) and each measurement probe (3) of a second subgroup of measurement probes (3) comprises one sensor (4).

10. Measurement device according to claim 9, wherein the sensors (4) are provided at different positions with respect to the longitudinal direction of the measurement probes (3).

11. Measurement device according to anyone of the preceding claims, wherein multiple sensors (4) are provided at each measurement probe, the sensors being arranged at different positions with respect to the longitudinal direction of the measurement probe (3).

12. Measurement device according to anyone of the preceding claims, wherein the measurement probes (3) comprise one or more markings for indicating the position of the sensor (4).

13. Measurement device according to anyone of the preceding claims, wherein said measurement probes (3) are configured such that all measurement probes (3) are inserted in a single piece of food or each measurement probe (3) or groups of measurement probes (3) are inserted in different pieces of food or different types of food.

14. Measurement device according to anyone of the preceding claims, comprising one or more wires (6) in order to be coupled with a cooking appliance or a wireless communication module in order to enable a wireless communication link with the cooking appliance.

15. Cooking appliance or food preservation appliance comprising a measurement device (1) according to anyone or the preceding claims.
